(19) Europäisches Patentamt
European Patent Office
Office européen des brevets

(11) EP 4 283 734 B1

# (12) EUROPEAN PATENT SPECIFICATION

(45) Date of publication and mention of the grant of the patent:
**20.05.2026 Bulletin 2026/21**

(21) Application number: **21921460.8**

(22) Date of filing: **06.12.2021**

(51) International Patent Classification (IPC):
***H01M 10/0567*** *(2010.01)* ***H01M 10/42*** *(2006.01)*
***H01M 10/052*** *(2010.01)* ***H01M 10/0525*** *(2010.01)*
***H01M 10/0569*** *(2010.01)*

(52) Cooperative Patent Classification (CPC):
**H01M 10/0569; H01M 10/052; H01M 10/0525; H01M 10/0567; H01M 10/4235;** H01M 2300/0025; H01M 2300/004; Y02E 60/10

(86) International application number:
**PCT/KR2021/018319**

(87) International publication number:
**WO 2022/158701 (28.07.2022 Gazette 2022/30)**

## (54) ELECTROLYTE FOR RECHARGEABLE LITHIUM BATTERY AND RECHARGEABLE LITHIUM BATTERY INCLUDING SAME

ELEKTROLYT FÜR EINE WIEDERAUFLADBARE LITHIUMBATTERIE UND WIEDERAUFLADBARE LITHIUMBATTERIE DAMIT

ÉLECTROLYTE POUR BATTERIE AU LITHIUM RECHARGEABLE ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2021 KR 20210009659**

(43) Date of publication of application:
**29.11.2023 Bulletin 2023/48**

(73) Proprietor: **Samsung SDI Co., Ltd.**
**Yongin-si, Gyeonggi-do 17084 (KR)**

(72) Inventors:
- **KIM, Dahyun**
  **Yongin-si, Gyeonggi-do 17084 (KR)**
- **KIM, Minseo**
  **Yongin-si, Gyeonggi-do 17084 (KR)**
- **KIM, Sanghyung**
  **Yongin-si, Gyeonggi-do 17084 (KR)**
- **KIM, Sanghoon**
  **Yongin-si, Gyeonggi-do 17084 (KR)**
- **PARK, Hyejin**
  **Yongin-si, Gyeonggi-do 17084 (KR)**
- **WOO, Myungheui**
  **Yongin-si, Gyeonggi-do 17084 (KR)**
- **RYU, Bokyung**
  **Yongin-si, Gyeonggi-do 17084 (KR)**
- **LEE, Tae Jin**
  **Yongin-si, Gyeonggi-do 17084 (KR)**
- **CHO, Wonseok**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(56) References cited:
**WO-A1-2015/158755**
**KR-A- 20140 062 596**
**KR-A- 20160 145 723**
**KR-A- 20170 018 739**
**US-A1- 2018 241 078**
**KR-A- 20000 015 946**
**KR-A- 20140 062 596**
**KR-A- 20160 145 723**
**US-A1- 2014 134 479**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 283 734 B1

## Description

### [Technical Field]

This disclosure relates to an electrolyte for a rechargeable lithium battery and a rechargeable lithium battery including the same.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

Particularly, the electrolyte uses an organic solvent in which a lithium salt is dissolved, and such an electrolyte is important in determining stability and performance of a rechargeable lithium battery.

Recently, a safety problem has emerged due to an increase in energy density due to a high capacity of a rechargeable lithium battery, and a method of using a flame retardant as an additive for an electrolyte is known as one of the methods for improving safety.

As the flame retardant, fluorine-based compounds, phosphorus-based compounds, sulfur-based compounds, and the like are mainly used as compounds having low environmental pollution issues and flame retardancy, but the use of these flame retardants may cause deterioration in battery performance.

Accordingly, there is a demand for an electrolyte having improved battery performance while ensuring safety.

US 2014/134479 A1 discloses an electrolyte additive comprising a phosphonate and optionally a cyclophosphazene. WO 2015/158755 A1 relates to an electrolyte composition comprising a flame retardant and/or a non-flammable solvent, and a dicarboxylic acid ester.

### [Disclosure]

[Technical Problem]

An embodiment provides an electrolyte for a rechargeable lithium battery with improved high-temperature storage characteristics while securing battery safety such as thermal stability and penetration stability.

Another embodiment provides a rechargeable lithium battery having improved high-temperature storage characteristics by applying the electrolyte to improve high-temperature safety and, in particular, to reduce gas generation and a resistance increase rate during high-temperature storage.

[Technical Solution]

An embodiment of the present invention provides an electrolyte for a rechargeable lithium battery including a non-aqueous organic solvent, a lithium salt, and an additive, wherein the additive includes a composition including a first compound represented by Chemical Formula 1 and a second compound represented by Chemical Formula 2-1 or Chemical Formula 2-3.

[Chemical Formula 1] [Chemical Formula 2-1] [Chemical Formula 2-3]

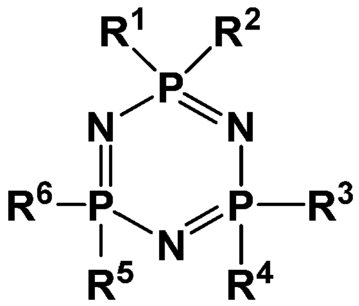
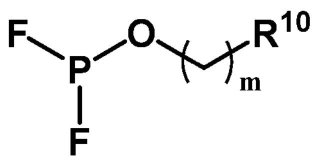
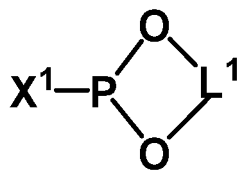

In Chemical Formula 1, $R^1$ to $R^6$ are each independently hydrogen, a halogen, a substituted or unsubstituted C1 to C10 alkyl group, a substituted or unsubstituted C1 to C10 alkoxy group, or a substituted or unsubstituted C1 to C10 alkylamine group.

In Chemical Formula 2-1, m is one of integers from 1 to 5, and $R^{10}$ is a cyano group (-CN) or a difluorophosphite group ($-OPF_2$).

In Chemical Formula 2-3, $X^1$ is a halogen group or $-O-L^{a4}-R^{a4}$, wherein $L^{a4}$ is a single bond or a substituted or unsubstituted C1 to C5 alkylene group, and $R^{a4}$ is a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and $L^1$ is a substituted or unsubstituted C2 to C5 alkylene group.

The composition includes the first compound and the second compound in a weight ratio of 0.5:1 to 10:1.

The composition may include the first compound and the second compound in a weight ratio of 5:1 to 10:1.

At least one of $R^1$ to $R^6$ in Chemical Formula 1 may be a fluoro group (-F).

At least one of $R^1$ to $R^6$ in Chemical Formula 1 may be a fluoro group (-F), and
at least one of the remaining $R^1$ to $R^6$ may be a substituted or unsubstituted C1 to C10 alkoxy group or a substituted or unsubstituted C1 to C10 alkylamine group.

The first compound may be represented by Chemical Formula 1, and Chemical Formula 1 may be represented by Chemical Formula 1A or Chemical Formula 1B.

[Chemical Formula 1A] [Chemical Formula 1B]

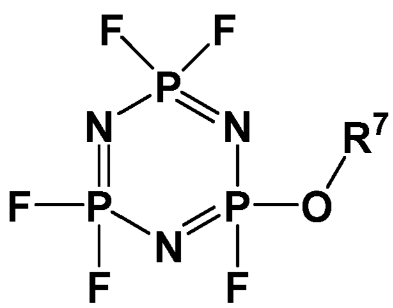
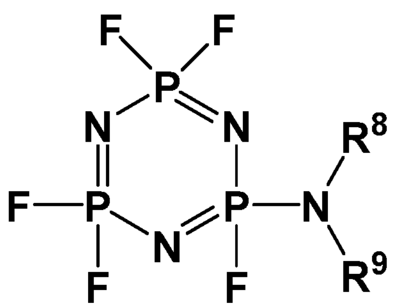

In Chemical Formula 1A and Chemical Formula 1B,
$R^7$ to $R^9$ are each independently a substituted or unsubstituted C1 to C10 alkyl group.

The first compound may be selected from compounds listed in Group 1.

[Group 1]

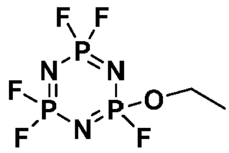
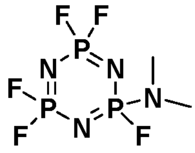

1-a 1-b

The second compound may be any one selected from compounds listed in Group 2.

[Group 2]

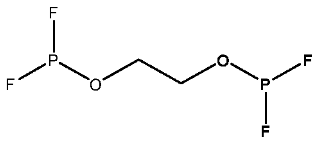
2-a

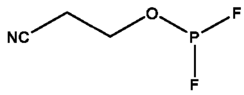
2-b

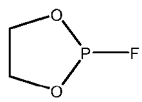
2-c

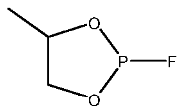
2-d

.

**The** first compound is included in an amount of 0.1 to 5.0 wt% based on the total weight of the electrolyte for the rechargeable lithium battery.

**The** second compound may be included in an amount of 0.1 to 5.0 wt% based on the total weight of the electrolyte for the rechargeable lithium battery.

**The** composition may be included in an amount of 1.0 to 10 wt% based on the total weight of the electrolyte for the rechargeable lithium battery.

Another embodiment of the present invention provides a rechargeable lithium battery including a positive electrode including a positive electrode active material, a negative electrode including a negative electrode active material, and the aforementioned electrolyte for the rechargeable lithium battery.

[Advantageous Effects]

Due to the additive with improved thermal safety, it is possible to implement a rechargeable lithium battery having improved high-temperature leaving characteristics by suppressing an increase in internal resistance and generation of gas after being left at a high temperature, and by suppressing a voltage drop.

**[Description of the Drawings]**

FIG. 1 is a schematic view showing a rechargeable lithium battery according to an embodiment of the present invention.

FIG. 2 is a graph showing operation times of current interrupt devices (CID) of the rechargeable lithium battery cells according to Examples 1 to 11 and Comparative Examples 1 to 7.

**[Mode for Invention]**

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, unless otherwise defined, "substituted" refers to replacement of at least one hydrogen in a substituent or compound by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to

C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention includes an electrolyte, a positive electrode, and a negative electrode.

The electrolyte includes a non-aqueous organic solvent, a lithium salt, and an additive, wherein the additive includes a composition including a first compound represented by Chemical Formula 1 and a second compound represented by Chemical Formula 2-1 or Chemical Formula 2-3.

[Chemical Formula 1] [Chemical Formula 2-1] [Chemical Formula 2-3]

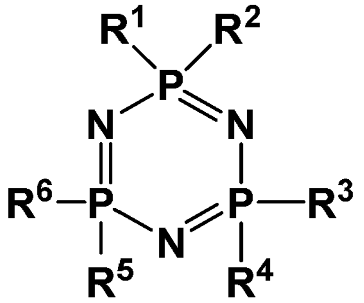
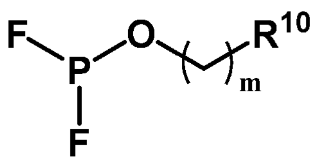
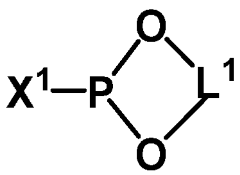

In Chemical Formula 1 $R^1$ to $R^6$ are each independently hydrogen, a halogen, a substituted or unsubstituted C1 to C10 alkyl group, a substituted or unsubstituted C1 to C10 alkoxy group, or a substituted or unsubstituted C1 to C10 alkylamine group;

in Chemical Formula 2-1 m is one of integers from 1 to 5, and $R^{10}$ is a cyano group (-CN) or a difluorophosphite group ($-OPF_2$); and
in Chemical Formula 2-3 $X^1$ is a halogen group or $-O-L^{a4}-R^{a4}$,
wherein $L^{a4}$ is a single bond or a substituted or unsubstituted C1 to C5 alkylene group, and $R^{a4}$ is a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and $L^1$ is a substituted or unsubstituted C2 to C5 alkylene group.

The first compound is a phosphazene-based compound. On ignition, when oxygen is generated due to decomposition of the electrolyte or the positive electrode active material, the first compound may trap this oxygen to prevent combustion. In addition, the first compound may trap a radical product and thus terminate a radical chain reaction, suppressing a side reaction in the battery. Furthermore, the first compound acts as a film decomposition additive and may from a film with low resistance.

That is, the composition may improve the high-temperature safety of the battery by including the first compound represented by Chemical Formula 1.

The second compound may be reduced and decomposed to form an SEI (solid electrolyte interface) film on the

negative electrode and prevents the decomposition of the electrolyte and the resulting decomposition reaction of the electrodes, thereby suppressing an increase in internal resistance due to the gas generation.

In addition, when the second compound is included with the first compound together, the electrolyte may be suppressed from the high temperature decomposition effect through stabilization of a lithium salt in the electrolyte as well as from flame retardancy, improving the effect of improving gas generation inside the battery at a high temperature and simultaneously, improving battery safety and cycle-life characteristics.

When the first compound and the second compound are used in combination, the electrolyte may be suppressed from a side reaction through stabilization of a lithium salt in addition to flame retardancy, improving battery high temperature stability characteristics.

The composition includes the first compound and the second compound in a weight ratio of 0.5:1 to 10:1.

As a specific example, the composition may include the first compound and the second compound in a weight ratio of 1 : 1 to 10 : 1, 2 : 1 to 10 : 1, or 3 : 1 to 10 : 1.

As a most specific example, the composition may include the first compound and the second compound in a weight ratio of 5:1 to 10:1.

For example, at least one of $R^1$ to $R^6$ in Chemical Formula 1 may be a fluoro group (-F).

As a specific example, at least one of $R^1$ to $R^6$ in Chemical Formula 1 is a fluoro group (-F),
at least one of the remaining $R^1$ to $R^6$ may be a substituted or unsubstituted C1 to C10 alkoxy group or a substituted or unsubstituted C1 to C10 alkylamine group.

As a more specific example, the first compound is represented by Chemical Formula 1, and Chemical Formula 1 may be represented by Chemical Formula 1A or Chemical Formula 1B.

[Chemical Formula 1A] [Chemical Formula 1B]

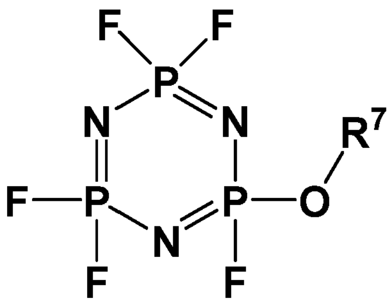
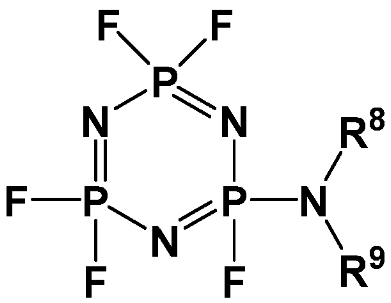

In Chemical Formula 1A and Chemical Formula 1B,
$R^7$ to $R^9$ are each independently a substituted or unsubstituted C1 to C10 alkyl group.

For example, the first compound may be selected from compounds listed in Group 1.

[Group 1]

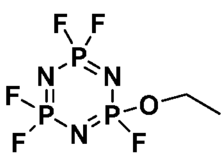
1-a

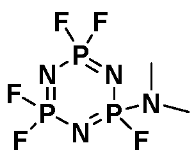
**1-b**

.

The second compound is represented by Chemical Formula 2-1 or Chemical Formula 2-3.

For example, the second compound may be any one selected from compounds listed in Group 2.

[Group 2]

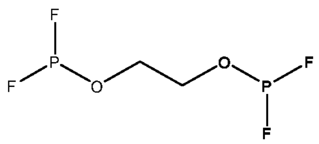

2-a

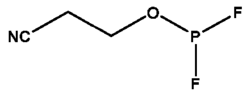

2-b

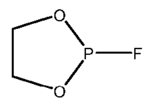

2-c

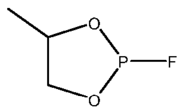

2-d

.

According to the most specific embodiment, the additive included in the electrolyte for the rechargeable lithium battery according to the present invention may be a composition including at least one of the compounds listed in Group 1 as the first compound and at least one of the compounds listed in Group 2 as the second compound.

For example, the additive included in the electrolyte for the rechargeable lithium battery according to the present invention may be a composition including any one of Compound 1-a or Compound 1-b of Group 1 as a first compound and Compound 2-a or Compound 2-d of Group 2 as a second compound.

In an embodiment, the first compound and the second compound may be included in a weight ratio of about 0.5: 1, about 1: 1, about 2: 1, about 3: 1, about 5: 1, or about 10: 1.

Meanwhile, the first compound is included in an amount of about 0.1 wt% to about 5.0 wt% based on the total weight of the electrolyte for the rechargeable lithium battery.

For example, it may be included in 0.2 wt% to about 5.0 wt%, for example, about 0.25 wt%, about 0.5 wt%, about 1.0 wt%, about 1.5 wt%, about 2.5 wt% or about 5.0 wt%.

In addition, the second compound may be included in an amount of 0.1 to 5.0 wt% based on the total weight of the electrolyte for the rechargeable lithium battery.

For example, it may be included in about 0.2 wt% to about 5.0 wt%, about 0.3 wt% to about 5.0 wt%, about 0.4 wt% to about 5.0 wt%, or about 0.5 wt% to about 5.0 wt%, for example about 0.5 wt%, about 1.0 wt%, about 2.5 wt% wt% or about 5.0 wt%.

The composition including the first compound and the second compound may be included in an amount of about 1.0 wt% to about 10 wt% based on the total weight of the electrolyte for the rechargeable lithium battery.

For example, the composition including the first compound and the second compound may be included in an amount of about 0.75 wt%, about 1.0 wt%, about 1.5 wt%, about 2.0 wt%, about 3.0 wt%, about 5.5 wt%, about 6.0 wt%, about 7.5 wt% or about 10 wt% based on the total weight of the electrolyte for the rechargeable lithium battery.

When the contents of the composition and each component, that is, the first compound and the second compound in the composition, are within the above ranges, it is possible to realize a rechargeable lithium battery with improved thermal stability and suppressed generation of gas inside the battery, thereby improving battery characteristics at room temperature and high temperature.

The non-aqueous organic solvent serves as a medium for transmitting ions taking part in the electrochemical reaction of a battery.

The non-aqueous organic solvent serves as a medium for transmitting ions taking part in the electrochemical reaction of a battery.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. The alcohol-based solvent may include ethanol, isopropyl alcohol, and the like, and the aprotic solvent may include nitriles such as $R^1$-CN (wherein $R^1$ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent is prepared by mixing a cyclic carbonate and a chain carbonate. When the cyclic carbonate and chain carbonate are mixed together in a volume ratio of 1:9 to 9:1, a performance of the electrolyte may be improved.

In particular, in an embodiment, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

More specifically, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 3.

[Chemical Formula 3]

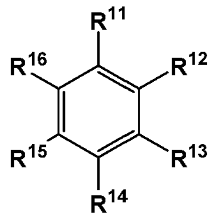

In Chemical Formula 3, $R^{11}$ to $R^{16}$ are the same or different and are hydrogen, a halogen, a C1 to C10 alkyl group, a haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate, vinyl ethylene carbonate, or an ethylene carbonate-based compound represented by Chemical Formula 4 as an additive to improve cycle-life of a battery.

[Chemical Formula 4]

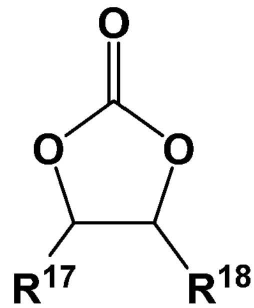

In Chemical Formula 4, $R^{17}$ and $R^{18}$ are the same or different, and are selected from hydrogen, a halogen, a cyano group (CN), a nitro group ($NO_2$), and a fluorinated C1 to C5 alkyl group, provided that at least one of $R^{17}$ and $R^{18}$ is selected from a halogen, a cyano group (CN), a nitro group ($NO_2$), and a fluorinated C1 to C5 alkyl group, and both $R^{17}$ and $R^{18}$ are not hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. When such an additive for improving cycle-life is further used, its amount may be appropriately adjusted.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include one or more selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein x and y are natural numbers, for example an integer of 1 to 20), LiCl, LiI, $LiB(C_2O_4)_2$ (lithium bis(oxalato) borate: LiBOB), LiDFOB (lithium difluoro(oxalato)borate), and $Li[PF_2(C_2O_4)_2]$ (lithium

difluoro (bis oxalato) phosphate). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

Specifically, one or more of a composite oxide of a metal selected from cobalt, manganese, nickel, and a combination thereof and lithium may be used.

Of course, one having a coating layer on the surface of the lithium composite oxide may be used, or a mixture of the composite oxide and a compound having a coating layer may be used. The coating layer may include one or more coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

The positive electrode active material may be, for example, one or more of lithium composite oxides represented by Chemical Formula 5.

[Chemical Formula 5] $LixM^1_{1-y-z}M^2_yM^3_zO_2$

In Chemical Formula 5,

$0.5 \leq x \leq 1.8$, $0 \leq y < 1$, $0 \leq z < 1$, $0 \leq y+z < 1$, and $M^1$, $M^2$, and $M^3$ are each independently any one selected from a metal such as Ni, Co, Mn, Al, Sr, Mg, or La, and a combination thereof.

In an embodiment, $M^1$ may be a metal such as Co, Mn, Al, Sr, Mg, or La, and $M^2$ and $M^3$ may each independently be Ni or Co.

In a specific embodiment, $M^1$ may be Mn or Al, and $M^2$ and $M^3$ may each independently be Ni or Co, but they are not limited thereto.

In a more specific embodiment, the positive electrode active material may be a lithium composite oxide represented by any one of Chemical Formulas 5-1 to 5-3.

[Chemical Formula 5-1] $Li_{x1}Ni_{y1}Co_{z1}Al_{1-y1-z1}O_2$

In Chemical Formula 5-1, $1 \leq x1 \leq 1.2$, $0<y1<1$, and $0<z1<1$.

[Chemical Formula 5-2] $Li_{x2}Ni_{y2}Co_{z2}Mn_{1-y2-z2}O_2$

In Chemical Formula 5-2, .

$$1 \leq x2 \leq 1.2,\ 0<y2<1,\ \text{and}\ 0<z2<1.$$

[Chemical Formula 5-3] $Li_{x3}CoO_2$

In Chemical Formula 5-3,

$$0.5< x3 \ \leq 1.$$

For example, in Chemical Formula 5-1, $1 \leq x1 \leq 1.2$, $0.5 \leq y1<1$, and $0<z1 \leq 0.5$.

As a specific example, in Chemical Formula 5-1, $1 \leq x1 \leq 1.2$, $0.6 \leq y1<1$, and $0<z1 \leq 0.5$.

As a more specific example, in Chemical Formula 5-1, $1 \leq x1 \leq 1.2$, $0.7 \leq y1<1$, and $0<z1 \leq 0.5$.

For example, in Chemical Formula 5-1, $1 \leq x1 \leq 1.2$, $0.8 \leq y1<1$, and $0<z1 \leq 0.5$.

For example, in Chemical Formula 5-2, $1 \leq x2 \leq 1.2$, $0.3 \leq y2<1$, and $0.3 \leq z2<1$.

As a specific example, in Chemical Formula 5-2, $1 \leq x2 \leq 1.2$, $0.6 \leq y2<1$, and $0.3 \leq z2<1$.

As a more specific example, in Chemical Formula 5-2, $1 \leq x2 \leq 1.2$, $0.7 \leq y2 < 1$, and $0.3 \leq z2 < 1$.

For example, in Chemical Formula 5-2, $1 \leq x2 \leq 1.2$, $0.8 \leq y2 < 1$, and $0.3 \leq z2 < 1$.

A content of the positive electrode active material may be 90 wt% to 98 wt% based on the total weight of the positive electrode active material layer.

In an embodiment of the present invention, the positive electrode active material layer may optionally include a conductive material and a binder. In this case, a content of the conductive material and the binder may be 1 wt% to 5 wt%, respectively, based on the total weight of the positive electrode active material layer.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery and examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, $SiO_x$ ($0 < x < 2$), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, $SnO_2$, a Sn-$R^{22}$ alloy (wherein $R^{22}$ is an element selected from an alkali metal, an alkaline-earth metal, a Group 13 element, a Group 14 element, a Group 15 element, a Group 16 element, a transition metal, a rare earth element, and a combination thereof, but not Sn), and the like. One or more of these materials may be mixed with $SiO_2$.

The elements Q and $R^{22}$ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the negative electrode active material may be a Si-C composite including a Si-based active material and a carbon-based active material.

An average particle diameter of the Si-based active material in the Si-C composite may be 50 nm to 200 nm.

When the average particle diameter of the Si-based active material is within the above range, volume expansion occurring during charging and discharging may be suppressed, and a break in a conductive path due to particle crushing during charging and discharging may be prevented.

The Si-based active material may be included in an amount of 1 wt% to 60 wt%, for example, 3 wt% to 60 wt% based on the total weight of the Si-C composite.

In another specific embodiment, the negative electrode active material may further include crystalline carbon together with the aforementioned Si-C composite.

When the negative electrode active material includes a Si-C composite and crystalline carbon together, the Si-C composite and crystalline carbon may be included in the form of a mixture, and in this case, the Si-C composite and crystalline carbon may be included in a weight ratio of 1:99 to 50:50. More specifically, the Si-C composite and crystalline carbon may be included in a weight ratio of 5 : 95 to 20 : 80.

The crystalline carbon may include, for example, graphite, and more specifically, natural graphite, artificial graphite, or a mixture thereof.

An average particle diameter of the crystalline carbon may be 5 μm to 30 μm.

In the present specification, an average particle diameter may be a particle size (D50) at a volume ratio of 50% in a cumulative size-distribution curve.

The Si-C composite may further include a shell surrounding a surface of the Si-C composite, and the shell may include amorphous carbon.

The amorphous carbon may include soft carbon, hard carbon, a mesophase pitch carbonized product, calcined coke, or a mixture thereof.

The amorphous carbon may be included in an amount of 1 to 50 parts by weight, for example, 5 to 50 parts by weight, or 10 to 50 parts by weight based on 100 parts by weight of the carbon-based active material.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 parts by weight to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, one or more of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

## DETAILED DESCRIPTION OF THE EMBODIMENTS

Hereinafter, examples of the present invention and comparative examples are described. These examples, however, are not in any sense to be interpreted as limiting the scope of the invention.

**Synthesis Example: Synthesis of Compound 1-b**

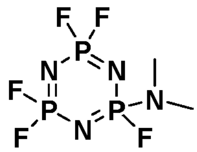

**1-b**

Compound 1-b was synthesized with reference to published patent KR2013-0124180.

**Manufacture of Rechargeable Lithium Battery Cells**

**Example 1**

$LiNi_{0.01}Co_{0.07}Al_{0.02}O_2$ as a positive electrode active material, polyvinylidene fluoride as a binder, and ketjen black as a conductive material were mixed in a weight ratio of 97:2:1 and then, dispersed in N-methyl pyrrolidone, preparing positive electrode active material slurry.

The positive electrode active material slurry was coated on a 14 μm-thick Al foil, dried at 110 °C, and pressed, manufacturing a positive electrode.

A negative electrode active material prepared by mixing artificial graphite and an Si-C composite in a weight ratio of 93:7, a styrene-butadiene rubber binder as a binder, and carboxylmethyl cellulose as a thickener were mixed in a weight ratio of 97:1:2 and then, dispersed in distilled water, preparing negative electrode active material slurry.

The Si-C composite included a core including artificial graphite and silicon particles and coal-based pitch coated on the surface of the core.

The negative electrode active material slurry was coated on a 10 μm-thick Cu and then, dried at 100 °C and pressed, manufacturing a negative electrode.

The positive electrode and the negative electrode were assembled with a 25 μm-thick polyethylene separator to manufacture an electrode assembly, and an electrolyte was injected thereinto, manufacturing a rechargeable lithium battery cell.

The electrolyte has a composition as follows.

(Composition of electrolyte)

Salt: 1.5 M $LiPF_6$
Solvent: ethylene carbonate: ethylmethyl carbonate: dimethyl carbonate (EC: EMC:DMC = a volume ratio of 20:10:70)
Additive: Composition including 5.0 wt% of Compound 1-a and 0.5 wt% of Compound 2-a
(In the composition of the electrolyte, "wt%" is based on the total content (lithium salt + non-aqueous organic solvent))

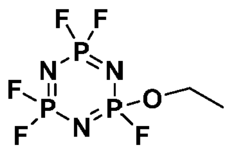

1-a

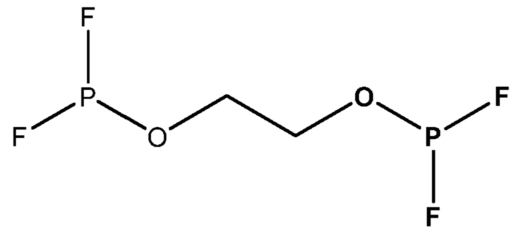

2-a

**Example 2**

A rechargeable lithium battery cell was manufactured in the same manner as in Example 1, except that the additive composition was prepared by changing Compound 1-a to 2.5 wt%.

**Example 3**

A rechargeable lithium battery cell was manufactured in the same manner as in Example 1, except that the additive composition was prepared by changing Compound 1-a to 1.5 wt%.

**Example 4**

A rechargeable lithium battery cell was manufactured in the same manner as in Example 1, except that the additive composition was prepared by changing Compound 1-a to 1.0 wt%.

**Example 5**

A rechargeable lithium battery cell was manufactured in the same manner as in Example 1, except that the additive composition was prepared by changing Compound 1-a to 0.5 wt%.

**Example 6**

A rechargeable lithium battery cell was manufactured in the same manner as in Example 1, except that the additive composition was prepared by changing Compound 1-a to 0.25 wt%.

**Example 7**

A rechargeable lithium battery cell was manufactured in the same manner as in Example 1, except that the additive composition was prepared by changing Compound 2-a to 1.0 wt%.

**Example 8**

A rechargeable lithium battery cell was manufactured in the same manner as in Example 1, except that the additive composition was prepared by changing Compound 2-a to 2.5 wt%.

**Example 9**

A rechargeable lithium battery cell was manufactured in the same manner as in Example 1, except that the additive composition was prepared by changing Compound 2-a to 5.0 wt%.

**Example 10**

A rechargeable lithium battery cell was manufactured in the same manner as in Example 1, except for preparing the additive composition by changing Compounds 1-a to 1-b.

**Example 11**

A rechargeable lithium battery cell was manufactured in the same manner as in Example 1, except for preparing

the additive composition by changing Compound 2-a to Compound 2-d.

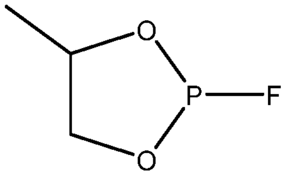

2-d

Comparative Example 1

A rechargeable lithium battery cell was manufactured in the same manner as in Example 1, except for using an electrolyte without additives.

Comparative Example 2

A rechargeable lithium battery cell was manufactured in the same manner as in Example 1, except that the electrolyte was prepared with an additive not using Compound 2-a in the composition.

Comparative Example 3

A rechargeable lithium battery cell was manufactured in the same manner as in Example 1, except that the electrolyte was prepared with an additive not using Compound 1-a in the composition.

Comparative Example 4

A rechargeable lithium battery cell was manufactured in the same manner as in Example 1, except that the additive composition was prepared by changing Compound 2-a in the composition to Compound i (tris(1,1,1,3,3,3-hexafluoroisopropyl) phosphate).

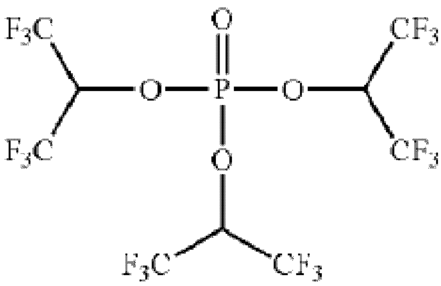

(Compound i)

Comparative Example 5

A rechargeable lithium battery cell was manufactured in the same manner as in Example 1, except that the additive composition was prepared by changing Compound 2-a in the composition to Compound ii (tris(trimethylsilyl) phosphite).

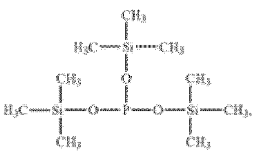

(Compound ii)

## Comparative Example 6

A rechargeable lithium battery cell was manufactured in the same manner as in Example 1, except that the additive composition was prepared by changing Compound 1-a to 0.05 wt%.

## Comparative Example 7

A rechargeable lithium battery cell was manufactured in the same manner as in Example 1, except that the additive composition was prepared by changing Compound 1-a to 10 wt%.

The additive compositions of the rechargeable lithium battery according to Examples 1 to 11 and Comparative Examples 1 to 7 are as shown in Table 1.

(Table 1)

| | Additive composition | | |
|---|---|---|---|
| | First compound (wt%) | Second compound (wt%) | Mixing ratio |
| Example 1 | Compound 1-a (5.0) | Compound 2-a (0.5) | 10:1 |
| Example 2 | Compound 1-a 2.5 | Compound 2-a (0.5) | 5:1 |
| Example 3 | Compound 1-a 1.5 | Compound 2-a (0.5) | 3:1 |
| Example 4 | Compound 1-a 1.0 | Compound 2-a (0.5) | 2:1 |
| Example 5 | Compound 1-a 0.5 | Compound 2-a (0.5) | 1:1 |
| Example 6 | Compound 1-a 0.25 | Compound 2-a (0.5) | 0.5:1 |
| Example 7 | Compound 1-a (5.0) | Compound 2-a (1.0) | 5:1 |
| Example 8 | Compound 1-a (5.0) | Compound 2-a (2.5) | 2:1 |
| Example 9 | Compound 1-a (5.0) | Compound 2-a (5.0) | 1:1 |
| Example 10 | Compound 1-b 5.0 | Compound 2-a (0.5) | 10:1 |
| Example 11 | Compound 1-a (5.0) | compound 2-d (0.5) | 10:1 |
| Comparative Example 1 | - | - | - |
| Comparative Example 2 | Compound 1-a (5.0) | - | - |
| Comparative Example 3 | - | Compound 2-a (0.5) | - |
| Comparative Example 4 | Compound 1-a (5.0) | Compound i (0.5) | 10:1 |
| Comparative Example 5 | Compound 1-a (5.0) | Compound ii (0.5) | 10:1 |
| Comparative Example 6 | Compound 1-a (0.05) | Compound 2-a (0.5) | 0.1:1 |
| Comparative Example 7 | Compound 1-a (10) | Compound 2-a (0.5) | 20:1 |

### Evaluation 1: Penetration Safety Evaluation

The rechargeable lithium battery cells according to Examples 1 to 11 and Comparative Examples 1 to 7 were evaluated with respect to penetration characteristics in the following method, and the results are shown in Table 2.

A penetration limit test was performed to evaluate battery safety by charging each cell to SOC (state of charge) 50 (capacity corresponding to a half of a total capacity of 100) and SOC (state of charge) 70 (capacity corresponding to 70% of a total capacity of 100) and then, penetrating the cells with a 3.0 pi nail at 150 mm/s. The criteria is as follows;

(Evaluation Criteria)

L0: no reaction
L1: leakage
L2: exothermic at less than 200 °C

L3: fumes, exothermic at greater than or equal to 200 °C
L4: ignition
L5: explosion

(Table 2)

| | SOC 50 | SOC 70 |
|---|---|---|
| Example 1 | L0 | L0 |
| Example 2 | L0 | L0 |
| Example 3 | L1 | L1 |
| Example 4 | L1 | L1 |
| Example 5 | L1 | L1 |
| Example 6 | L1 | L1 |
| Example 7 | L1 | L0 |
| Example 8 | L1 | L1 |
| Example 9 | L1 | L1 |
| Example 10 | L0 | L0 |
| Example 11 | L0 | L0 |
| Comparative Example 1 | L5 | L5 |
| Comparative Example 2 | L1 | L5 |
| Comparative Example 3 | L5 | L5 |
| Comparative Example 4 | L5 | L5 |
| Comparative Example 5 | L5 | L5 |
| Comparative Example 6 | L4 | L4 |
| Comparative Example 7 | L4 | L4 |

Referring to Table 2, the rechargeable lithium battery cells according to Examples 1 to 11 turned out to have excellent penetration safety, compared with the rechargeable lithium battery cells according to Comparative Examples 1 to 7.

In other words, this excellent effect was not realized, when in the composition of the additive according to the present invention, any component was missing, some compounds were changed into other types of compounds, or the composition of the additive was out of the specific ranges.

**Evaluation 2: Evaluation of High-temperature Leaving Characteristics**

The rechargeable lithium battery cells of Examples 1 to 11 and Comparative Examples 1 to 7 were charged at a charge and discharge rate of 0.5 C in a mode of 4.35 V CC/CV for 3 hours and then, left in a 90 °C chamber for 110 hours to measure an operation time of CID (Current Interrupt Device).

The CID (Current Interrupt Device) is a device detecting a pressure change, that is, a pressure increase in the closed and sealed device and cutting off a current by itself, when the pressure exceeds a certain pressure, which is obvious in the art and thus will not be illustrated in detail.

CID operation times of the rechargeable lithium battery cells were measured to evaluate high-temperature leaving characteristics, and the results are shown in FIG. 2.

FIG. 2 is a graph showing operation times of current interrupt devices (CID) of the rechargeable lithium battery cells according to Examples 1 to 11 and Comparative Examples 1 to 7.

In addition, the CID operation times were measured to evaluate high-temperature storage characteristics of the rechargeable lithium battery cells.

Referring to FIG. 2, Comparative Examples 1 to 5, when at least one compound was omitted in the composition of the present invention, a sharp voltage drop appeared before about 30 hours at a high-temperature storage of 90° C, but the

examples including the additive according to an example embodiment of the present invention exhibited no voltage drop to at least 50 hours, which confirmed that the additive brought about an effect of delaying the OCV drop by delaying the electrolyte decomposition and thus reducing the resistance increase.

In addition, Comparative Examples 6 and 7, in which the mixing ratio of the additive was out of the specific range, exhibited a sharp voltage drop before about 30 hours, but the examples including the additive according to an example embodiment of the present invention exhibited no voltage drop to at least 50 hours and thus a gas-reducing effect. Accordingly, the examples turned out to exhibit an effect of delaying the OCV drop by delaying the electrolyte decomposition and thus reducing the resistance increase.

In other words, the rechargeable lithium battery cells according to the present invention exhibited an excellent effect of suppressing the gas generation during the high-temperature storage.

Therefore, in the case of a rechargeable lithium battery using the specific combination of the composition according to the present embodiment as an additive, improved penetration safety and high-temperature leaving characteristics may be implemented.

## Claims

1. An electrolyte for a rechargeable lithium battery, comprising

a non-aqueous organic solvent,
a lithium salt, and
an additive,
wherein the additive is a composition including a first compound represented by Chemical Formula 1 and a second compound represented by Chemical Formula 2-1 or Chemical Formula 2-3:

[Chemical Formula 1] [Chemical Formula 2-1] [Chemical Formula 2-3]

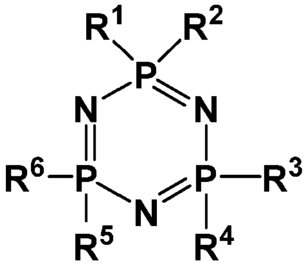

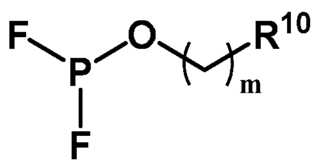

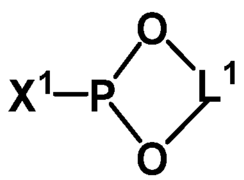

wherein,

in Chemical Formula 1, Chemical Formula 2-1, and Chemical Formula 2-3,
$R^1$ to $R^6$ are each independently hydrogen, a halogen, a substituted or unsubstituted C1 to C10 alkyl group, a substituted or unsubstituted C1 to C10 alkoxy group, or a substituted or unsubstituted C1 to C10 alkylamine group,
m is one of integers from 1 to 5, and $R^{10}$ is a cyano group (-CN) or a difluorophosphite group ($-OPF_2$),
$X^1$ is a halogen group or $-O-L^{a4}-R^{a4}$, $L^{a4}$ is a single bond or a substituted or unsubstituted C1 to C5 alkylene group, $R^{a4}$ is a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and $L^1$ is a substituted or unsubstituted C2 to C5 alkylene group,
wherein "substituted" refers to replacement of at least one hydrogen by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group, and
wherein the first compound is included in an amount of 0.1 wt% to 5.0 wt% based on the total weight of the electrolyte for the rechargeable lithium battery and the composition includes the first compound and the second compound in a weight ratio of 0.5:1 to 10:1.

**2.** The electrolyte for the rechargeable lithium battery of claim 1, wherein the composition includes the first compound and the second compound in a weight ratio of 5:1 to 10:1.

**3.** The electrolyte for the rechargeable lithium battery of claim 1, wherein at least one of $R^1$ to $R^6$ in Chemical Formula 1 is a fluoro group (-F).

**4.** The electrolyte for the rechargeable lithium battery of claim 3, wherein at least one of the remaining $R^1$ to $R^6$ is a substituted or unsubstituted C1 to C10 alkoxy group or a substituted or unsubstituted C1 to C10 alkylamine group.

**5.** The electrolyte for the rechargeable lithium battery of claim 1, wherein

the first compound is represented by Chemical Formula 1, and Chemical Formula 1 is represented by Chemical Formula 1A or Chemical Formula 1B:

[Chemical Formula 1A] [Chemical Formula 1B]

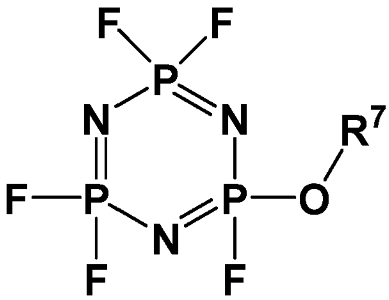

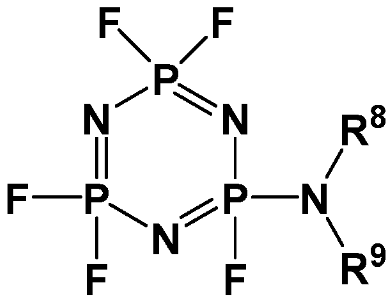

wherein, in Chemical Formula 1A and Chemical Formula 1B, $R^7$ to $R^9$ are each independently a substituted or unsubstituted C1 to C10 alkyl group.

**6.** The electrolyte for the rechargeable lithium battery of claim 1, wherein the first compound is any one selected from the compounds listed in Group 1:

[Group 1]

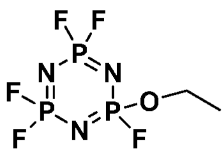

1-a

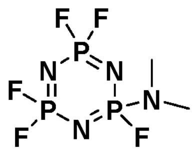

**1-b**

.

**7.** The electrolyte for the rechargeable lithium battery of claim 1, wherein the second compound is any one selected from compounds listed in Group 2:

[Group 2]

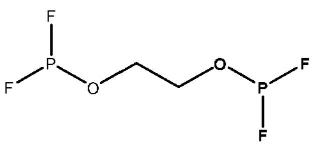

2-a

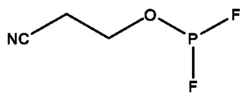

2-b

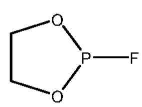

2-c

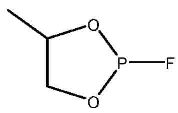

2-d

.

**8.** The electrolyte for the rechargeable lithium battery of claim 1, wherein the second compound is included in an amount of 0.1 wt% to 5.0 wt% based on the total weight of the electrolyte for the

rechargeable lithium battery.

**9.** The electrolyte for the rechargeable lithium battery of claim 1, wherein the composition is included in an amount of 1.0 wt% to 10 wt% based on the total weight of the electrolyte for the rechargeable lithium battery.

**10.** A rechargeable lithium battery comprising

a positive electrode including a positive electrode active material;
a negative electrode including a negative electrode active material; and
the electrolyte for the rechargeable lithium battery of any one of claim 1 to claim 9.

**Patentansprüche**

**1.** Elektrolyt für eine wiederaufladbare Lithiumbatterie, umfassend

ein nicht wässriges organisches Lösungsmittel,
ein Lithiumsalz, und
ein Additiv,
wobei das Additiv eine Zusammensetzung ist, die eine erste Verbindung, dargestellt durch die chemische Formel 1, und eine zweite Verbindung, dargestellt durch die chemische Formel 2-1 oder die chemische Formel 2-3, beinhaltet:

[chemische Formel 1] [chemische Formel 2-1] [chemische Formel 2-3]

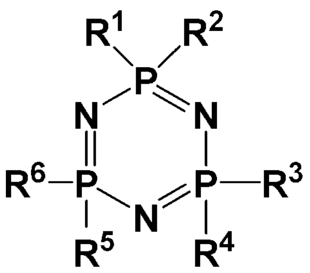

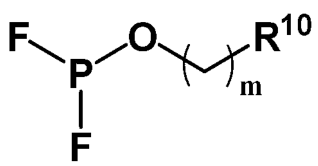

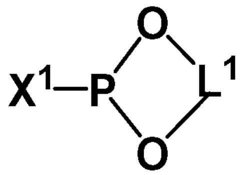

wobei

in der chemischen Formel 1, der chemischen Formel 2-1 und der chemischen Formel 2-3
$R^1$ bis $R^6$ jeweils unabhängig Wasserstoff, ein Halogen, eine substituierte oder unsubstituierte C1- bis C10-Alkylgruppe, eine substituierte oder unsubstituierte C1- bis C10-Alkoxygruppe oder eine substituierte oder unsubstituierte C1- bis C10-Alkylamingruppe sind,
m eine der ganzen Zahlen von 1 bis 5 ist und $R^{10}$ eine Cyanogruppe (-CN) oder eine Difluorphosphitgruppe ($-OPF_2$) ist,
$X^1$ eine Halogengruppe oder -O-$L^{a4}$-$R^{a4}$ ist, $L^{a4}$ eine Einfachbindung oder eine substituierte oder unsubstituierte C1 bis C5-Alkylengruppe ist, $R^{a4}$ eine substituierte oder unsubstituierte C1- bis C10-Alkylgruppe, eine substituierte oder unsubstituierte C2- bis C10-Alkenylgruppe, eine substituierte oder unsubstituierte C2- bis C10-Alkinylgruppe, eine substituierte oder unsubstituierte C3- bis C10-Cycloalkylgruppe, eine substituierte oder unsubstituierte C3- bis C10-Cycloalkenylgruppe, eine substituierte oder unsubstituierte C3- bis C10-Cycloalkinylgruppe oder eine substituierte oder unsubstituierte C6- bis C20-Arylgruppe ist und $L^1$ eine substituierte oder unsubstituierte C2- bis C5-Alkylengruppe ist,
wobei sich "substituiert" auf den Ersatz mindestens eines Wasserstoffs durch Deuterium, eine Halogengruppe, eine C1- bis C30-Alkylgruppe, eine C1-bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C10-Fluoralkylgruppe oder eine Cyanogruppe bezieht, und wobei die erste Verbindung in einer Menge von 0,1 Gew.-% bis 5,0 Gew.-% basierend auf dem Gesamtgewicht des Elektrolyten für die wiederaufladbare Lithiumbatterie enthalten ist und die Zusammensetzung die erste Verbindung und die zweite Verbindung in einem Massenverhältnis von 0,5:1 bis 10:1 enthält.

2. Elektrolyt für die wiederaufladbare Lithiumbatterie nach Anspruch 1, wobei die Zusammensetzung die erste Verbindung und die zweite Verbindung in einem Gewichtsverhältnis von 5:1 bis 10:1 enthält.

3. Elektrolyt für die wiederaufladbare Lithiumbatterie nach Anspruch 1, wobei mindestens eines von $R^1$ bis $R^6$ in der chemischen Formel 1 eine Fluorgruppe (-F) ist.

4. Elektrolyt für die wiederaufladbare Lithiumbatterie nach Anspruch 3, wobei mindestens eines der verbleibenden $R^1$ bis $R^6$ eine substituierte oder unsubstituierte C1 bis C10-Alkoxygruppe oder eine substituierte oder unsubstituierte C1 bis C10-Alkylamingruppe ist.

5. Elektrolyt für die wiederaufladbare Lithiumbatterie nach Anspruch 1, wobei

die erste Verbindung durch die chemische Formel 1 dargestellt ist und die chemische Formel 1 durch die chemische Formel 1A oder die chemische Formel 1B dargestellt ist:

[chemische Formel 1A] [chemische Formel 1B]

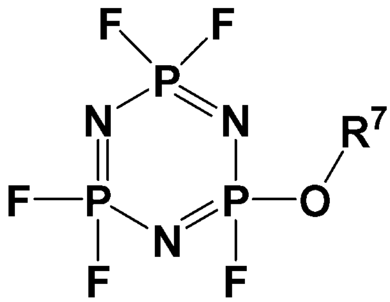
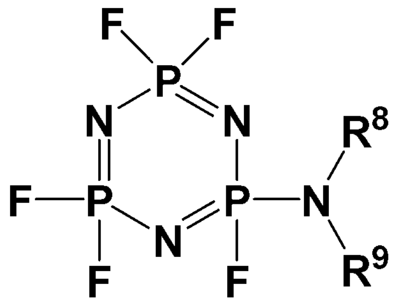

wobei in der chemischen Formel 1A und der chemischen Formel 1B $R^7$ bis $R^9$ jeweils unabhängig eine substituierte oder unsubstituierte C1- bis C10-Alkylgruppe sind.

6. Elektrolyt für die wiederaufladbare Lithiumbatterie nach Anspruch 1, wobei die erste Verbindung eine beliebige ist, die aus den in Gruppe 1 aufgeführten Verbindungen ausgewählt ist:

[Gruppe 1]

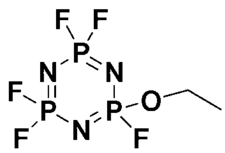
1-a

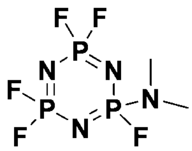
**1-b**

.

7. Elektrolyt für die wiederaufladbare Lithiumbatterie nach Anspruch 1, wobei die zweite Verbindung eine beliebige ist, die aus den in Gruppe 2 aufgeführten Verbindungen ausgewählt ist:

[Gruppe 2]

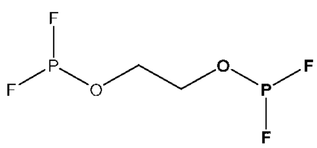
2-a

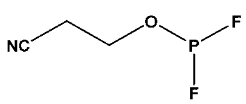
2-b

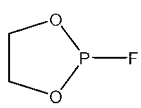
2-c

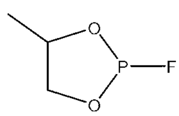
2-d

.

**8.** Elektrolyt für die wiederaufladbare Lithiumbatterie nach Anspruch 1, wobei die zweite Verbindung in einer Menge von 0,1 Gew.-% bis 5,0 Gew.-% basierend auf dem Gesamtgewicht des Elektrolyten für die wiederaufladbare Lithiumbatterie enthalten ist.

**9.** Elektrolyt für die wiederaufladbare Lithiumbatterie nach Anspruch 1, wobei die Zusammensetzung in einer Menge von 1,0 Gew.-% bis 10 Gew.-% basierend auf dem Gesamtgewicht des Elektrolyten für die wiederaufladbare Lithiumbatterie enthalten ist.

**10.** Wiederaufladbare Lithiumbatterie, umfassend

eine positive Elektrode, die ein Aktivmaterial für die positive Elektrode beinhaltet;
eine negative Elektrode, die ein Aktivmaterial für die negative Elektrode beinhaltet; und
den Elektrolyten für die wiederaufladbare Lithiumbatterie nach einem von Anspruch 1 bis Anspruch 9.

## Revendications

**1.** Électrolyte pour une batterie rechargeable au lithium, comportant :

un solvant organique non aqueux,
un sel de lithium, et
un additif,
dans lequel l'additif est une composition incluant un premier composé représenté par la Formule chimique 1 et un deuxième composé représenté par la Formule chimique 2-1 ou la Formule chimique 2-3 :

[Formule chimique 1]

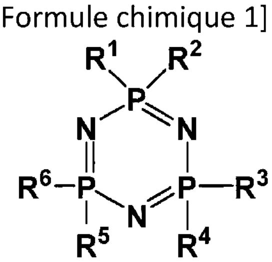

[Formule chimique 2-1]

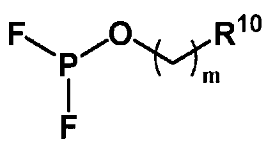

[Formule chimique 2-3]

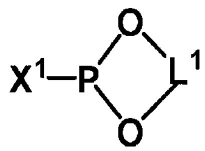

dans lequel,

dans la Formule chimique 1, la Formule chimique 2-1 et la Formule chimique 2-3,
$R^1$ à $R^6$ sont chacun indépendamment hydrogène, un halogène, un groupe alkyle en C1 à C10 substitué ou non substitué, un groupe alcoxy en C1 à C10 substitué ou non substitué, ou un groupe alkylamine en C1 à C10 substitué ou non substitué,
m est l'un des entiers de 1 à 5, et $R^{10}$ est un groupe cyano (-CN) ou un groupe difluorophosphite ($-OPF_2$),
$X^1$ est un groupe halogène ou $-O-L^{a4}-R^{a4}$, $L^{a4}$ est une liaison unique ou un groupe alkylène en C1 à C5 substitué ou non substitué, $R^{a4}$ est un groupe alkyle en C1 à C10 substitué ou non substitué, un groupe alcényle en C2 à C10 substitué ou non substitué, un groupe alcynyle en C2 à C10 substitué ou non substitué, un groupe cycloalkyle en C3 à C10 substitué ou non substitué, un groupe cycloalcényle en C3 à C10 substitué ou non substitué, un groupe cycloalcynyle en C3 à C10 substitué ou non substitué, ou un groupe aryle en C6 à C20 substitué ou non substitué, et $L^1$ est un groupe alkylène en C2 à C5 substitué ou non substitué,
dans lequel le terme « substitué » désigne le remplacement d'au moins un hydrogène par le deutérium, un groupe halogène, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe fluoroalkyle en C1 à C10 ou un groupe cyano, et
dans lequel le premier composé est inclus en une quantité de 0,1 % en poids à 5,0 % en poids sur la base du poids total de l'électrolyte pour la batterie rechargeable au lithium et la composition comporte le premier composé et le deuxième composé dans un rapport pondéral de 0,5:1 à 10:1.

**2.** Électrolyte pour la batterie rechargeable au lithium selon la revendication 1, dans lequel

la composition comporte le premier composé et le deuxième composé dans un rapport pondéral de 5:1 à 10:1.

3. Électrolyte pour la batterie rechargeable au lithium selon la revendication 1, dans lequel au moins l'un parmi $R^1$ à $R^6$ dans la Formule chimique 1 est un groupe fluoro (-F).

4. Électrolyte pour la batterie rechargeable au lithium selon la revendication 3, dans lequel au moins l'un parmi les $R^1$ à $R^6$ restants est un groupe alcoxy en C1 à C10 substitué ou non substitué ou un groupe alkylamine en C1 à C10 substitué ou non substitué.

5. Électrolyte pour la batterie rechargeable au lithium selon la revendication 1, dans lequel le premier composé est représenté par la Formule

[Formule chimique 1A] [Formule chimique 1B]

chimique 1, et la Formule chimique 1 est représentée par la Formule chimique 1A ou la Formule chimique 1B :

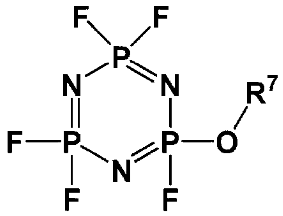
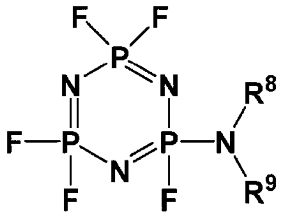

dans lequel, dans la Formule chimique 1A et la Formule chimique 1B,
$R^7$ à $R^9$ sont chacun indépendamment un groupe alkyle en C1 à C10 substitué ou non substitué.

6. Électrolyte pour la batterie rechargeable au lithium selon la revendication 1, dans lequel le premier composé est l'un quelconque sélectionné parmi les composés énumérés dans le Groupe 1 :

[Groupe 1]

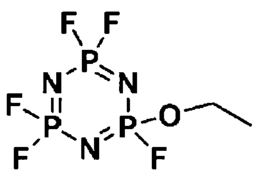
1-a

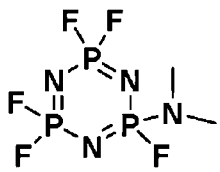
1-b

.

7. Électrolyte pour la batterie rechargeable au lithium selon la revendication 1, dans lequel le deuxième composé est l'un quelconque sélectionné parmi les composés énumérés dans le Groupe 2 :

[Groupe 2]

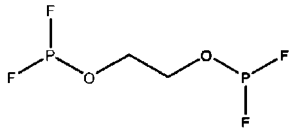

2-a

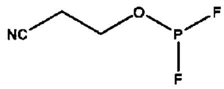

2-b

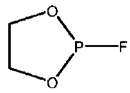

2-c

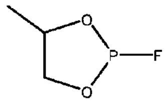

2-d

.

**8.** Électrolyte pour la batterie rechargeable au lithium selon la revendication 1, dans lequel le deuxième composé est inclus en une quantité de 0,1 % en poids à 5,0 % en poids sur la base du poids total de l'électrolyte pour la batterie rechargeable au lithium.

**9.** Électrolyte pour la batterie rechargeable au lithium selon la revendication 1, dans lequel la composition est incluse en une quantité de 1,0 % en poids à 10 % en poids sur la base du poids total de l'électrolyte pour la batterie rechargeable au lithium.

**10.** Batterie rechargeable au lithium comportant :

une électrode positive incluant un matériau actif d'électrode positive ;
une électrode négative incluant un matériau actif d'électrode négative ; et
l'électrolyte pour la batterie rechargeable au lithium selon l'une quelconque de la revendication 1 à la revendication 9.

FIG. 1

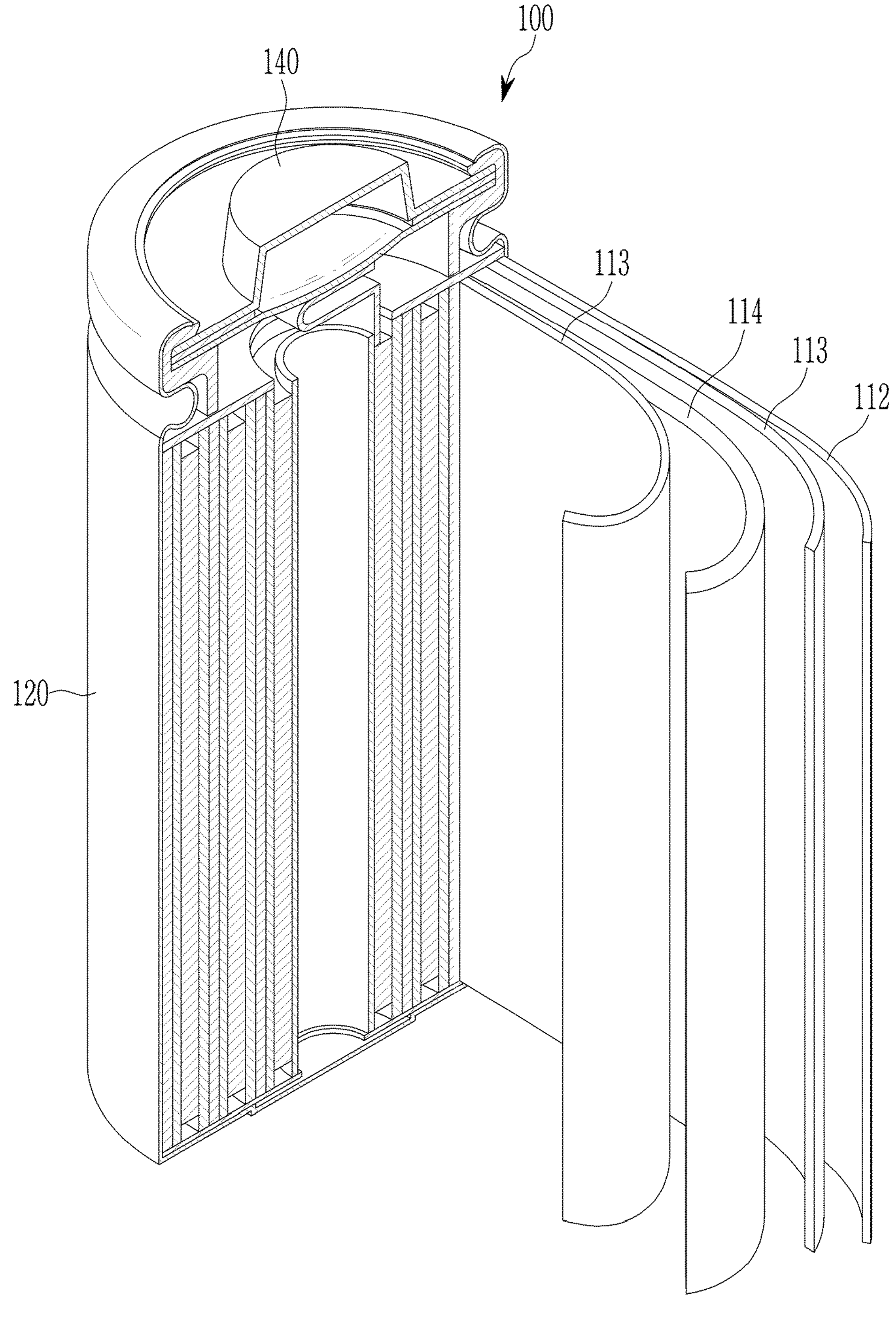

FIG. 2

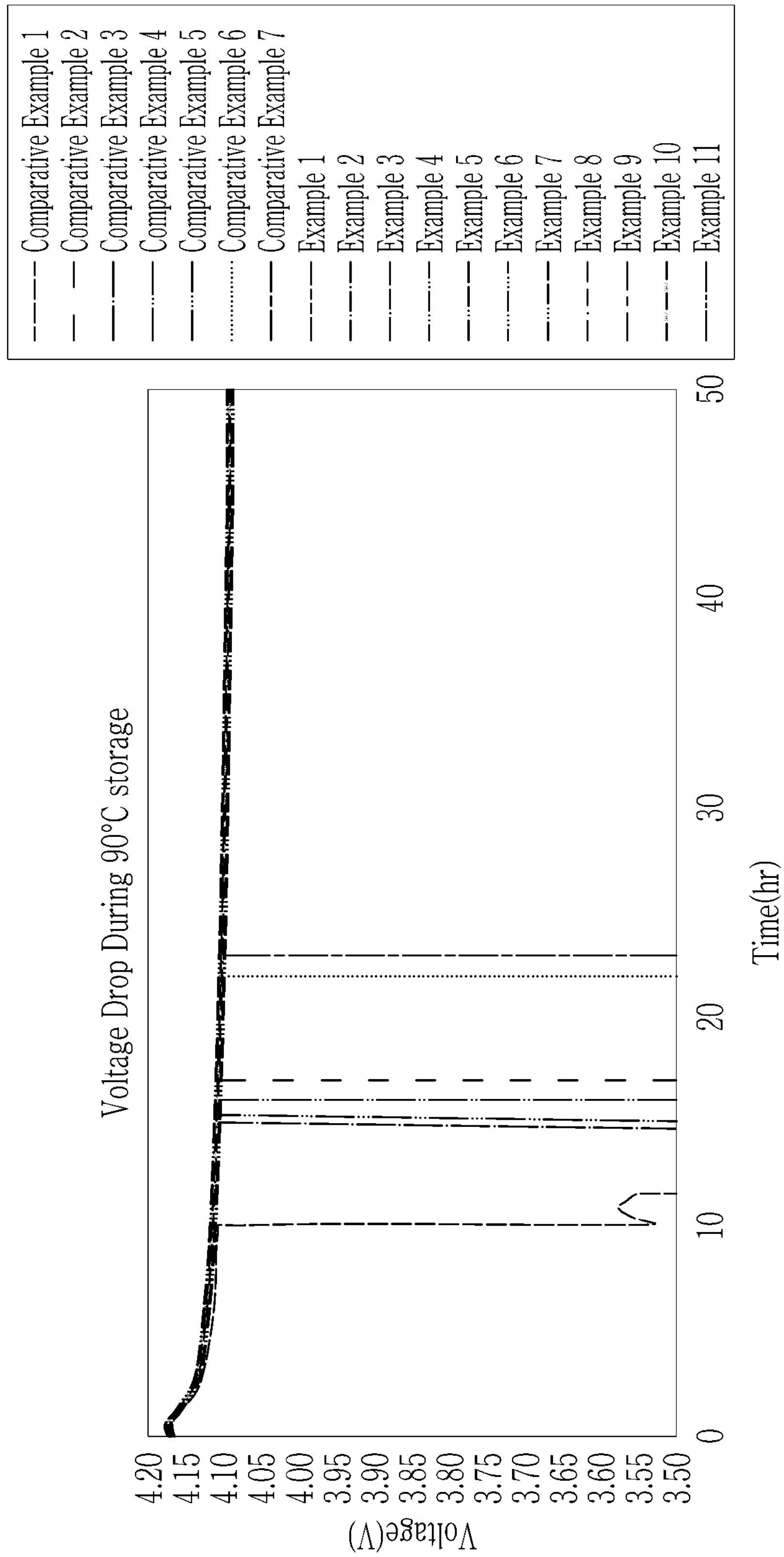
Voltage Drop During 90°C storage
Voltage(V)
4.20
4.15
4.10
4.05
4.00
3.95
3.90
3.85
3.80
3.75
3.70
3.65
3.60
3.55
3.50
Time(hr)
0
10
20
30
40
50
Comparative Example 1
Comparative Example 2
Comparative Example 3
Comparative Example 4
Comparative Example 5
Comparative Example 6
Comparative Example 7
Example 1
Example 2
Example 3
Example 4
Example 5
Example 6
Example 7
Example 8
Example 9
Example 10
Example 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2014134479 A1
- WO 2015158755 A1
- KR 20130124180